# EUROPEAN PATENT APPLICATION

(11) **EP 4 560 562 A1**
(43) Date of publication of application: **28.05.2025**
(21) Application number: 24214102.6
(22) Date of filing: 20.11.2024
(51) Int. Cl.: G06Q 30/06, G06Q 20/12, G06Q 20/34, G06Q 20/40

(54) **A USER PROXY SYSTEM FOR FASTER, MORE EFFICIENT AND MORE SECURE USER DATA PROCESSING**

(30) Priority: 22.11.2023 NO 20231268
(71) Applicant: Receipts AS, 7750 Namdalseid (NO)
(72) Inventor: Ferstad, Kent Olav, 7010 Trondheim (NO); De Villiers, Alistair, 0286 Oslo (NO)
(74) Representative: Bryn Aarflot AS

(57) **Abstract**

A user-proxy system in data communication with at least one transaction initiator, at least one payment system provider, wherein a user's payment instrument associated with the at least one payment system provider is registered to the user-proxy; comprising a first storage module configured to store user data; and a second storage module comprising computer readable media having instructions that, when executed on a processor, perform the tasks of: identifying that a transaction has occurred with a user-proxy registered payment instrument at a user-proxy registered transaction initiator; acquiring, by the user-proxy, a replica of the authorisation message associated with the enrolled payment instrument; enhancing, by the user-proxy, the authorisation message by incorporating a unique-user-reference, along with a user's pre-established directives for data-processing, obtained or generated during the payment instrument's enrollment process to provide a user-data enriched authorisation message; priming the user-data enriched authorisation message for onward transmission to a verified transaction initiator, for further data-processing; comparing information in the authorisation message with pre-registered system identifications present in the authorisation message by the transaction initiator to identify the correct transaction initiator of the corresponding electronic transaction and thereby a correct recipient of user data; and transmitting, by the user-proxy, the user data to said correct transaction initiator.

## Description

### Field of the invention

The present invention relates to a user-proxy integrated with a pay-proxy enabling compliant exchange of digital user references to ensure proof of data ownership and user data-processing instructions related to electronic transactions.

### Background

To recognize a payment card and connect purchase data to a user's merchant profile the user may need to manually register a profile after which the merchant system may tokenize the corresponding payment card. Said tokenization process may be performed through a merchant-provided Payment Card Industry Data Security Standard (PCI-DSS) environment for payment card tokenization in partnership with a payment system provider. This may allow the merchant to request a unique payment token from the payment system provider for the enrolled payment card whenever the payment card is used to execute a transaction. In this way, the particular payment card, and corresponding user, may be recognised.

It is an object of the invention to provide a system which overcomes some of the problems with the existing solutions for payment card recognition, in particular, limitations to specific platforms and requirements for merchants to set up complex systems with payment card tokenizers. More particularly, the present invention seeks to provide a more streamlined and efficient alternative, and remove the need for tokenization, thus simplifying a user experience and negating management of multiple merchant specific portals.

### Summary of the Invention

According to a first aspect of the invention there is provided a user-proxy system in data communication with at least one transaction initiator, at least one payment system provider, wherein a user's payment instrument associated with the at least one payment system provider is registered to the user-proxy; comprising a first storage module configured to store user data; and a second storage module comprising computer readable media having instructions that, when executed on a processor, perform the tasks of: identifying that a transaction has occurred with a user-proxy registered payment instrument at a user-proxy registered transaction initiator; acquiring, by the user-proxy, a replica of the authorisation message associated with the enrolled payment instrument; enhancing, by the user-proxy, the authorisation message by incorporating a unique-user-reference, along with a user's pre-established directives for data-processing, obtained or generated during the payment instrument's enrolment process to provide a user-data enriched authorisation message; priming the user-data enriched authorisation message for onward transmission to a verified transaction initiator, for further data-processing; comparing information in the authorisation message with pre-registered system identifications present in the authorisation message by the transaction initiator to identify the correct transaction initiator of the corresponding electronic transaction and thereby a correct recipient of user data; and transmitting, by the user-proxy, the user data to said correct transaction initiator.

The unique-user-reference associated with the payment instrument may provide an authentication key for data ownership belonging to the user associated with the payment instrument.

The system may be configured to perform real-time exchange of user and/or purchase related data between the transaction initiator and a transaction authoriser associated with the least one payment system provider via the user-proxy.

The system may be configured, if a transaction is initiated when the user-proxy is in an offline state, to perform exchange of user and/or purchase related data between the transaction initiator and a transaction authoriser associated with the least one payment system provider via the user-proxy for a batch of a plurality of transactions once the user-proxy enters an online state.

The transaction initiator may form part of the system and is configured to store the unique-user-reference with the transaction data to provide to the transaction initiator a proof of data ownership belonging to the user.

Wherein the transaction initiator may be connected with a loyalty program: the transaction initiator may be further configured to identify whether or not the payment instrument is enrolled in the loyalty program; wherein, if it is identified that the payment instrument is not enrolled, the computer readable media of the second storage module comprises further instructions that, when executed on a processor, perform the tasks of: generating an enrolment message to the user; transmitting an enrolment request through the user-proxy to a predetermined electronic ID provider if the system receives a user consent message; and digitally sending one or more of a user's predefined credentials, contact information, and marketing consents to the transaction initiator.

Transaction initiator may be further configured to: connect the one or more of the user's predetermined credentials, contact information, and marketing consents with the unique-user-reference; and establish a loyalty program profile for the user.

The transaction initiator may be further configured to use the unique-user-reference associated with the payment instrument as a unique identifier for authorising access to purchased services or products.

The transaction initiator may be digitally connected to an online instrument and the payment instrument as the unique identifier is used as a key card to access said online instruments.

The online instrument may comprise a digital content distribution platform.

The online instrument may comprise a physical access control system.

The system may further comprise: a platform selected by the user; wherein the first storage module comprises one or more predetermined user data processing instructions comprising a digital receipts service instructions; and wherein the second storage module comprises instructions for a digital receipt service that, when executed on a processor, perform the task of: generating a digital receipt; delivering the digital receipt to the selected platform.

According to a second aspect of the invention there is provided a method for secure user data processing using a user-proxy comprising: a) enrolling at least one payment instrument in a user-proxy system; b) initiating an electronic transaction at a transaction initiator by the enrolled payment instrument; c) sending an authorisation request to a transaction authoriser by the transaction initiator through a payment system provider; d) generating and retaining an authorisation message by at least the transaction initiator and the transaction authoriser, wherein the authorisation message comprises distinctive system and transaction tracing identifications; e) approving by the transaction authorizer the requested transaction and issuing an approval code; f) receiving by the transaction initiator an approved authorisation message response, wherein the approved authorisation message response comprises the unique approval code; g) gathering and archiving, by the transaction initiator, transaction data from a corresponding payment log, via a payment system provider, wherein the payment system provider may be a payment terminal, gateway and/or wallet; h) after obtaining the user's consent, issuing a unique-user-reference and linking said unique-user-reference to the enrolled payment instrument; i) acquiring, by the user-proxy, a replica of the authorisation message associated with the enrolled payment instrument; j) enhancing, by the user-proxy, the authorisation message by incorporating the unique-user-reference, along with a user's pre-established directives for data-processing, obtained or generated during the payment instrument's enrolment process to provide a user-data enriched authorisation message; k) priming the user-data enriched authorisation message for onward transmission to a verified transaction initiator, for further data-processing; l) comparing information in the authorisation message response to identify the correct transaction initiator of the corresponding electronic transaction and thereby a correct recipient of user data; and m) transmitting, by the user-proxy, the user data to said correct transaction initiator.

The unique-user-reference associated with the payment instrument may provide authentication of a data ownership belonging to the user associated with the payment instrument.

The method may further comprise real time exchange of user and/or purchase related data between the transaction initiator and the transaction authoriser via the user-proxy.

Steps a) to m) may be repeated each time a transaction is initiated at a transaction initiator registered with the user-proxy.

The method may further comprise, if a transaction is initiated when the user-proxy is in an offline state, performing the steps of real time exchange of user and/or purchase related data between the transaction initiator and the transaction authoriser via the user-proxy for a batch of a plurality of transactions once the user-proxy enters an online state.

The method may further comprising: storing, by the transaction initiator, the unique-user-reference with the transaction data to provide to the transaction initiator a proof of data ownership belonging to the user.

Wherein the transaction initiator is connected with a loyalty program, the method may further comprise: identifying by the transaction initiator whether or not the payment instrument is enrolled in the loyalty program; wherein, if it is identified that the payment instrument is not enrolled, the method further comprises: generating an enrolment message to the user; wherein, if the user consents, transmitting an enrolment request through the user-proxy to a predetermined electronic ID provider; wherein, if the user consents, digitally sending, by the user-proxy, one or more of a user's predefined credentials, contact information, and marketing consents to the transaction initiator.

The method may further comprise: connecting the one or more of the user's predetermined credentials, contact information, and marketing consents with the unique-user-reference; and establishing a loyalty program profile for the user.

The method may further comprise using, by the transaction initiator, the unique-user-reference associated with the payment instrument as a unique identifier for authorising access to purchased services or products.

The transaction initiator may be digitally connected to an online instrument and the payment instrument as the unique identifier may be used as a key card to access said online instruments.

The online instrument may comprise a digital content distribution platform.

The online instrument may comprise a physical access control system.

The one or more predetermined user data processing instructions may comprise a digital receipts service, wherein the digital receipt service comprises: generating a digital receipt; delivering the digital receipt, by the user-proxy to a platform selected by the user.

According to a third aspect of the invention there is provided computer readable media having instructions that, when executed on a processor, perform the tasks of the second aspect of the invention.

### Brief Description of the Drawings

Fig. 1 is a diagram of a traditional method for joining a loyalty program of a particular merchant;
Fig. 2 shows a flowchart of a method according to the invention for secure user data processing using a user-proxy;
Fig. 3 shows a schematic diagram of a user-proxy system according to the invention;
Fig. 4 shows a schematic diagram of an interaction regime between various entities in a financial ecosystem;
Fig. 5 is a graphical representation of an example user interface of a transaction authoriser with user-proxy capabilities; and
Fig. 6 shows a visual representation of a number of functionalities enabled by the user-proxy system and method of the invention.

### Definitions

Unless otherwise defined, all terms of art, notations and other scientific terms or terminology used herein are intended to have the meanings commonly understood by those of skill in the art to which this invention pertains. In some cases, terms with commonly understood meanings are defined herein for clarity and/or for ready reference, and the inclusion of such definitions herein should not necessarily be construed to represent a substantial difference over what is generally understood in the art.

In this text, the term 'Webhook' refers at least to a method of automating the flow of information or data between different applications or services in real-time. It allows one application to send data to another application or endpoint as soon as a specific event occurs, eliminating the need for continuous polling or manual data retrieval. Webhooks are commonly used for various purposes, including data synchronization, notifications, and automation.

In this text, the term 'proof of purchase' refers at least to transaction detail and/or receipt data.

In this text, the term 'user consent' refers at least to a user giving their consent to one or several service(s) or data processing activities.

### Detailed Description

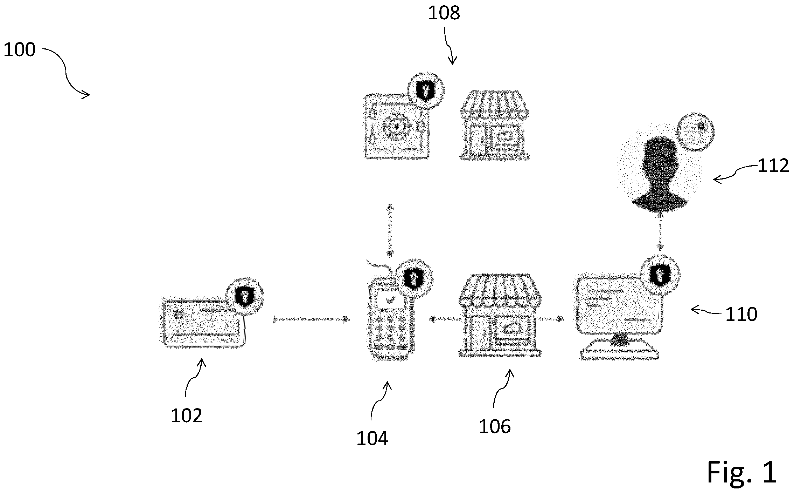

Figure 1 shows a traditional method 100 for enrolling in a loyalty program of a particular merchant. This is achieved by storing a unique payment token associated with a user's payment card information into a payment service system controlled by the merchant. Once enrolled, a payment system provider associated with the merchant will issue a personal key that is linked to user information in the database provided by an transaction initiator (Cashier system) associated with the merchant. Upon a subsequent use of the registered payment card at said merchants, the payment card can be recognized and membership benefits may be added to the user's profile. These benefits may comprise rewards, discounts, and bonus points to name a few non-limiting examples.

With further reference to figure 1, a payment card 102 is presented to payment service provider 104 associated with a merchant 106. The payment service provider 104 checks if a key associated with the payment card 102 is stored at a key management system 108 of the merchant 106. If the key associated with the particular payment card 102 is present in the key management system 108, this key is transmitted to the payment service provider 104 from the key management system 108 and subsequently forwarded to a merchant's controller, such as an electronic cash register. The merchant's controller looks up the retrieved key in a user profile database 110 to see if there is a match. If there is a match an associated enrolled user 112 is retrieved from the database 110 and benefits may be added to the user's profile. This process allows the merchant to identify the customer as a member of the loyalty program without directly handling or storing sensitive payment card information, enhancing security and simplifying the management of loyalty benefits.

This method 100 requires a one-to-one relation between each user and a specific system and/or merchant. Thus, in a financial ecosystem with a plurality of loyalty schemes for a plurality of merchants, method 100 is complex, costly and not suitable for interoperability.

In contrast, in the system and method of the present invention, the payment instrument can contain keys that are connected to a digital consent system in the form of a user-proxy which allows the user to add compliant consent preferences on how the keys are to function and enable and/or connect with value-added services and data-portability. The keys are a linking mechanism for connecting external data sources produced by a transaction initiator. The system and method of the invention provides an ecosystem with necessary functionality to widely connect and integrate databases globally using the payment instrument, along with keys and user consents preferences. This results in a generic omnichannel exchange of data within legal compliance of data protection regulations within the relevant jurisdiction wherein the transaction occurs (for example, the General Data Protection Regulations (GDPR) in the European Economic Area (EEA)) and user rights to data portability. Services are activated through a physical interaction between the payment instrument and a point of sale, a near field communication (NFC) reader or E-commerce checkout associated with the cashier system.

The two main functionalities enabled by the system and method of the present invention are firstly that a user may buy something at a store and a corresponding digital receipt is automatically linked to the corresponding transaction in the user's online bank, and secondly that the user's payment instrument can activate value-added services across different systems and service providers by being read in a terminal or NFC tag.

The core to the functionality is that through the consent infrastructure, the users can connect all the value-added services they desire with their data, and in addition use the keys as universal linking reference to identify the card as the source of origin for buying the service.

The present invention maintains transaction anonymity and complies with privacy requirements by incorporating a user-proxy that works in parallel with the pay-proxy. User consent to the card recognition protocol is obtained before any processing takes place, ensuring compliance with various regulations, such as GDPR in EEA. The user reference serves as a transaction identifier rather than a user identifier, enabling personalized services without compromising user privacy or transaction anonymity.

The system and method of the invention will now be described with reference to the example figures.

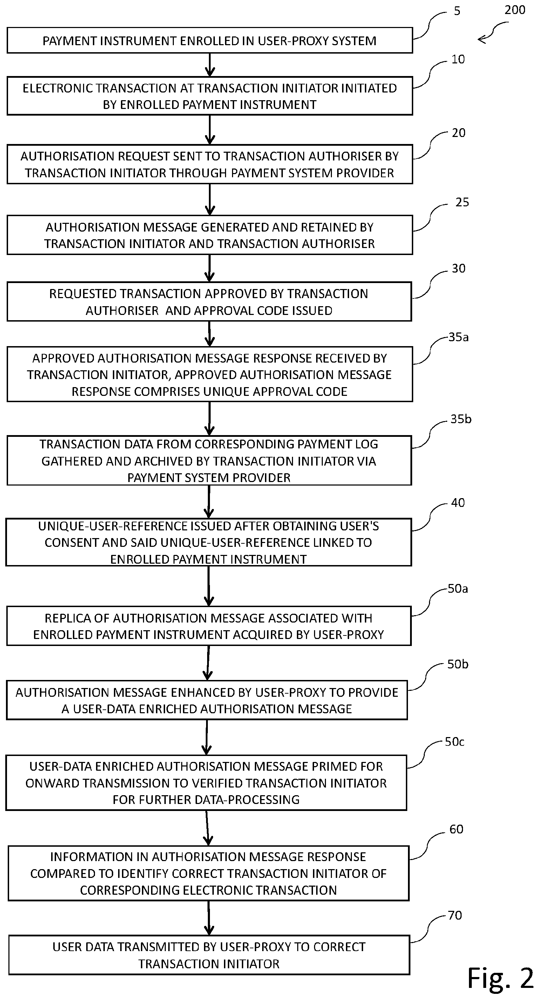

Figure 2 shows a method 200 according to the invention for secure user data processing using a user-proxy.

In a preliminary step 5, at least one payment instrument is enrolled in a user-proxy system. The user-proxy of the invention is a user-centric and user-controlled infrastructure that works in relation to the pay-proxy. During payment instrument enrolment, the payment instrument is populated with a unique-user-reference. Payment instrument whitelisting at the enrolment stage may be implemented comprising logic to instruct sending of copies of an authorisation message associated with the unique-user-reference to the user-proxy whenever a transaction is executed with the payment instrument enrolled, as described in more detail below.

At step 10, an electronic transaction at a transaction initiator is initiated by the enrolled payment instrument.

The electronic transaction may be a payment for physical good, digital goods, and services. The transaction initiator refers to the entity that initiates an electronic transaction and may be a cashier system, an e-commerce platform, or any other system that facilitates the initiation of a transaction. The cashier system may be an electronic cash register (ECR). The transaction is an electronic transaction which is a process of exchanging money within computer-mediated networks. The electronic transaction includes any transaction that involves the use of a payment instrument. The payment instrument is a device or method that can be used to make a purchase or transfer funds, in particular via an electronic payment. The payment instrument may include, but is not limited to, a credit card, debit card, and a mobile wallet.

At step 20, an authorization request is sent to a transaction authorizer by the transaction initiator through a payment system provider. This payment system provider serves as a gateway that connects various entities such as merchants, consumers, banks, and card schemes, facilitating online transactions.

At step 25, all parties involved in the electronic transaction generate and retain distinctive system and transaction tracing identifications which make up the authorisation message. Said parties at least comprise the transaction initiator (cashier system) and the transaction authoriser (issuing bank), but may also include card authorisation system providers, schemes, acquiring banks, payment terminals and wallets. More specifically, information logs from all parties engaged in the electronic transaction are combined to create an approved authorization message. However, the card issuer and the issuing bank is the ultimate controller of the data, meaning that schemes and card authorisation providers cannot share this data without the bank's permission.

Provided certain criteria are fulfilled, the transaction authorizer approves the requested transaction, step 30, issuing an approval code. The transaction authoriser is an entity participating in the authorisation of an electronic transaction. This may be a bank, scheme, or any other financial institution that has the authority to facilitate, approve or decline a transaction, and is an infrastructure that facilitates exchange of payment information between the transaction initiator and the transaction authoriser.

At step 35a, the transaction initiator receives an approved authorisation message response which includes a unique approval code granted by the transaction authoriser, signifying that the electronic transaction has been authorised. At this phase of the process 35b, the transaction initiator proceeds to gather and archive the necessary transaction data from the payment log, by the payment system provider, wherein the payment system provider may be a payment terminal, gateway, or wallet.

An example of data to be collected and stored by the transaction initiator is shown in Table 1.

**Table 1**

| **Priority** | **Payment System Provider** | **Data** | **Explanation** |
|---|---|---|---|
| 1 | terminalld | String | Unique Terminal ID provided by the payment terminal / gateway |
| 1 | authorizationCode | String (6 characters) | Authorization Code provided by the issuing bank to authorize the transaction |
| 1 | merchantld | String (max 15 characters) | Merchant ID provided by the Acquirer bank |
| 1 | amount | long | The total settled amount in currency |
| 1 | dateTime | String - YYMMDDh hmmss | The timestamp provided by the Terminal for initiating the transaction |

At step 40, a personal key (unique-user-reference) is issued after obtaining the user's consent and is linked to the enrolled payment instrument. This personal key is subsequently associated with the authorisation message related to the enrolled payment instrument. The personal key can take the form of a payment card ID, a payment card reference, or any other distinctive identifier that establishes a connection between the payment instrument and the transaction authoriser. This personal key, which is equivalent to the key provided to or by the user-proxy during the enrollment of the corresponding payment instrument, enables the User-Proxy with the method of enriching authorisation messages with personal keys.

At step 50a, the user-proxy acquires a precise replica of every singular authorisation message associated with the enrolled payment instrument. Subsequently, an enrichment process 50b is performed wherein the User-Proxy enhances the authorisation messages by incorporating the unique-user-reference obtained or generated during the payment instrument's enrollment process, along with the user's pre-established directives for data-processing. Upon completing the enrichment of the authorisation message with this data, they are officially designated as user-data enriched authorisation messages. Following the enrichment process, the user-data enriched authorisation message, i.e. a payload, is primed 50c for onward transmission to a verified transaction initiator, where it undergoes further data-processing.

At step 60, a transaction initiator can confirm its status as the legitimate recipient of the user-data enriched authorization message by verifying that it is the current integration controller of specific traceable system IDs (unique pay-proxy participant IDs) used in the authorisation process.

This authentication process can be implemented using various methods between the transaction initiator and the user-proxy. For instance, a) the transaction initiator can continuously update or mirror their currently controlled payment system provider IDs in a User-Proxy hosted database. Alternatively, b) they can subscribe to a notification endpoint and subsequently authenticate themselves as the current controller of these IDs whenever the User-Proxy receives an authorisation message where the transaction initiator is yet to be authenticated as the controller of said provider IDs.

In simpler terms, the user-proxy, which operates as a payment card recognition application programming interface (API), uses unique pay-proxy participant IDs to identify and authenticate the rightful recipient of user data. This is achieved by comparing essential information commonly used in the authorisation request between a point of sale (an electronic cashier system connected to a payment terminal/payment gateway) and the authorisation message response issued by the transaction authoriser, for example a bank or scheme.

This comparison enables identification of the correct transaction initiator of the corresponding electronic transaction and thereby a correct recipient of user data, i.e., the transaction initiator associated with the particular transaction which initiated method 200.

Upon correct identification of the correct recipient of the user data, user data is transmitted by the user-proxy to the transaction initiator, step 70. This transmitted data may be a push payload, an example of which is given in Table 2.

**Table 2**

| **Key** | **Data** | **Value** |
|---|---|---|
| terminalld | String | Unique Terminal Identifier |
| authorization Code | String (6 characters) | Unique Identifier for the executed Transaction |
| timeStamp | String - YYMMDDhhmmss | Unique Timestamp for the transaction executed by the Terminal / Gateway |
| amount | Long | Authorized Amount |
| paymentinstrument | ENUM | Bankaxept, Mastercard, Visa, Vipps... etc |
| merchantName | String | Name of Merchant |
| merchantld | String (max 15 characters) | Merchant ID provided by the Acquirer |
| UserReference | String | Unique Reference to recognize the payment card |
| UserDataProcessing Instructions | String | The data processing instructions defined by the user |

The identification of an enrolled payment instrument is accomplished by the User-Proxys and Transaction Initiators ability to compare data contained in the user-data enriched authorisation message replica, with the data extracted by the transaction initiator from the original authorisation message sourced from a payment system provider's log.

The transaction initiator has control over transaction data extracted from the authorised original authorisation message retrieved from a transaction log provided by a payment system provider. As shown in Table 3, in real-time, the user-proxy provides a replica of this said authorised authorisation message, which facilitates the recognition of the said transaction in collaboration with the transaction initiator. This method allows the said transaction to be enhanced with user data.

**Table 3**

| **Data** | **User Proxy** | **Transaction Initiator** | **Match** |
|---|---|---|---|
| terminalld | 123456 | 123456 | True |
| authorization Code | 1234 | 1234 | True |
| timeStamp | 2022-11-01T14:35:22 | 2022-11-01T14:35:22 | True |
| amount | 100.00 | 100.00 | True |
| merchantld | 5945 | 5945 | True |
| Confidence | | | 100% |

If confidence is at approximately 100%, i.e., if data elements in the replica authorisation message provided by the user-proxy and data elements in the original authorisation message controlled by the transaction initiator match, the method 200 can proceed with data extraction, for example as shown in Table 4.

**Table 4**

| **Data** | **User Proxy** | **Transaction initiator** | **Status** |
|---|---|---|---|
| userReference | AB1958754 | AB1958754 | Complete |
| userDataProcessing Instructions | Digital Receipts: "True" | Digital Receipts: "True" | Complete |
| | LoyaltyRequest: "False" | LoyaltyRequest: "False" | |

The transaction initiator receives the authorisation message, enriched with user data, and accurately identifies the corresponding transaction, systematically extracting and storing the additional user data within the corresponding digital receipt.

At this stage in the method, purchase data, being a combination of the digital receipt and transaction data, has been enriched by the unique-user-reference and the user's predefined directives for data processing.

The unique-user-reference can empower the users to assert their true ownership of the receipt, thereby effecting secure authentication. Furthermore, the unique-user-reference can act as a verified return address for the receipt data, facilitating the seamless automatic return of receipt data to the user's designated bank and/or accounting system. The user's predefined directives for data processing, allows the transaction initiator to act as a data controller, representing the user's interests.

This user data may be in the form of the unique-user-reference associated with the payment instrument. Thus, the transaction initiator can identify the payment instrument using only the unique-user-reference. Additionally, the unique-user-reference can be used to authenticate user data ownership. The unique-user-reference received by the transaction initiator (cashier system) can be stored with the actual transaction and purchase data. In this way, the unique-user-reference can be used to trace and authenticate transaction-related data across an entire financial ecosystem.

In other words, real-time access and matching of the distinctive system and transaction tracing identifications generated by the transaction initiator and the transaction authoriser in response to an electronic transaction occurs, and as a result the user and the transaction initiator are furnished with a unique-user-reference that verifies the user's ownership of data and the user's predetermined instructions for data processing.

Additionally, the user data may be in the form of predetermined user data processing instructions. The data processing instructions may comprise agreement to provide digital receipts and to which financial entities, and agreement to join a loyalty program.

In the example wherein the data processing instructions comprises providing digital receipts, the transaction initiator is instructed to send the corresponding digital receipt to the user-proxy. The user-proxy then forwards the digital receipt to a user's chosen financial entity. In an example, the financial entity for which the user has requested digital receipts are forwarded to comprises the bank associated with their payment card (which constitutes the payment instrument). The bank can then be instructed to save the digital receipts alongside the particular transaction log on the online bank platform interface. When receipt data is made available to the user in their online bank or accounting system, the user can choose to add their digital identity to the purchase data.

In the example wherein the data processing instructions comprises agreement to join loyalty programs at least one of, user credentials, contact information, and marketing consent are transmitted to the transaction initiator. Said user credentials, contact information, and marketing consent are predefined by the user during an enrolment process of the payment instrument with the user-proxy. User consent for enrolment in a loyalty program may be obtained in real-time through the loyalty enrolment API of the user-proxy. The transaction initiator (i.e., cashier system) may initiate the process, and the user may give their consent through their chosen E-ID provider. Thus, the process is digital and semi-automatic. Once the user consents, their predefined information is sent into the transaction initiator and connected with the payment instrument's unique-user-reference, enabling the user to be recognized and identified for future transactions.

The steps 10 to 60 of the method 200 occur in real-time whenever a transaction is executed by a user enrolled payment instrument, whereas step 70 may be executed in real time or a plurality of transactions may be dealt with in batch when a connection between the user-proxy and the transaction initiator moves from an offline to an online state.

The method described above enables the transaction initiator to perform data processing without necessitating prior consent from merchants. Instead, data processing is governed by end-users through the method of payment instrument recognition, aligning with compliance regulations and ensuring secure, efficient data management.

As well as at least one payment instrument needing to be enrolled in the user-proxy system, at least one participating transaction initiator i.e., ECR need to be enrolled.

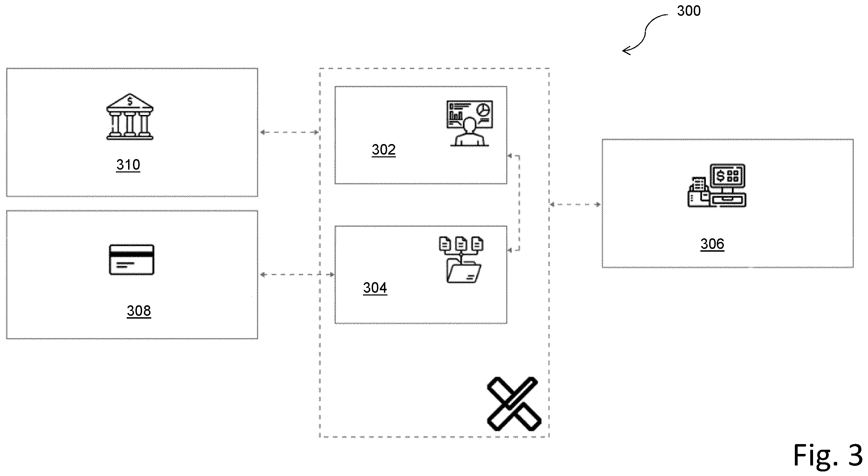

Figure 3 shows a user-proxy system 300 according to the invention. The user-proxy system 300 comprises a first storage module 302 and a second storage module 304. The first storage module 302 is configured to store user data. This user data is in the form of a user profile having information about the user's data processing preferences, information about the user's payment instrument and information about a user's associated payment authoriser and payment service providers. The second storage module 304 comprises computer readable media (CRM) having instructions that, when executed on a processor, perform the tasks of: identifying that a transaction has occurred with a user-proxy registered payment instrument at a user-proxy registered transaction initiator, retrieving an enriching the authorisation message with the unique user reference, from the user-proxy registered payment system provider, associated with the payment instrument, comparing data in the retrieved authorisation message with transaction data from the transaction initiator to identify such transaction initiator as a correct recipient of user data, and transmitting the user data to said correct recipient. The user-proxy system 300 is configured to be in data communication with transaction initiators 306, payment service providers 308 and transaction authorisers 310.

The first storage module 302 may include a CMH. The CMH is a robust system that communicates with integrated consent portals, linking user-specific references (unique-user-reference) associated with payment instruments to the user's consent preferences and data-processing instructions. The CMH allows users to manage their consent preferences and data processing instructions through a dedicated portal. Table 5 is an example of how the details for a specific payment card are presented.

**Table 5**

| **Payment Card** | | **User instructions** | **Status** | **Channel** |
|---|---|---|---|---|
| User-reference | XY909485 | Card Recognition | TRUE | Third Party integration with the user-proxy |
| PAN | 9875***12345 | Digital receipts | TRUE | User-proxy according to the present invention |
| | | Loyalty Scheme Preferences | TRUE | Third Party integration with the user-proxy |
| | | Data sharing | TRUE | Third Party integration |
| | | | | with the user-proxy |

The Loyalty Scheme Preferences (LSP) administration feature that allows users to customize the information and marketing consents that are shared with the transaction initiator (cashier system and merchant) when they opt-in to their loyalty programs using the user-proxy infrastructure according to the invention. Table 6 provides an example of the user-specific settings of the LSP administration feature functionality enabled by the invention.

**Table 6**

| **User-Reference** | **XY909485** | | |
|---|---|---|---|
| Status | "ON" | | |
| Key | Value | O/M | Marketing consent |
| Name | User name | Mandatory | "FALSE" |
| E-mail | User E-mail | Mandatory | "TRUE" |

The Data Sharing (DS) administration feature enables users to share their receipt data with relevant user-proxy integrated parties, specifically those services that rely on receipt data content for automation purposes. Table 7 provides an example of user-specific settings of the DS administration feature enabled by the invention.

**Table 7**

| **Recipient** | **Status** | **Data-processing (examples)** |
|---|---|---|
| Accouting provider: | "TRUE" | Collect receipts marked as corporate expense, and file them for user attestation in the system |
| "Fintech provider" | "TRUE" | Collect receipts from electronic stores in order to check for price match warranties made by the seller. |

The Consent Management Hub (CMH) may be underpinned by a Webhook and Rest API infrastructure. This infrastructure creates and monitors events, enabling real-time communication and instant updates to user settings. The CMH operates as a real-time communication conduit between a consent database and partner organisations. Users manage their consent settings through a consent frame or portal provided by their financial service providers. The consent frame/portal is a user interface provided by banks, accounting systems, or other financial service providers. Allowing users to manage their consent settings, and enabling them to control which services they wish to use and how their data is processed. The consent frame or portal communicates in real-time with the CMH and database. When a user changes their settings on the consent frame/portal, these changes are instantly relayed to the CMH. This real-time communication ensures that the user's preferences are always up-to-date across all services.

Thus, the user-proxy comprises a payment card application programming interface (API) which has the ability to match existing and mandatory information exchanged during transactions, providing a unique-user-reference that authenticates the user's data-ownership and data-processing instructions. The payment card API operates by comparing essential information that is shared in the authorisation message between the point of sale (transaction initiator i.e., an electronic cashier system connected with a payment terminal/payment gateway) and the transaction authoriser (i.e., issuing bank/scheme).

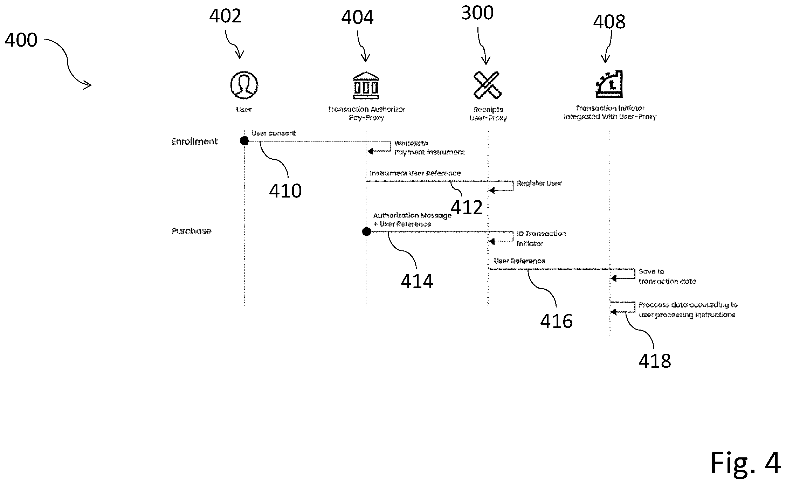

Figure 4 is a schematic diagram of an interaction regime between various entities in a financial ecosystem for an enrolment stage and a purchase stage of a use of the user-proxy according to the invention. As shown in the diagram, the financial ecosystem 400 comprises a user 402, a transaction authoriser 404 associated with a pay proxy, the user-proxy 300 of the invention and a transaction initiator 408. Upon enrolment of a user with the user-proxy, via an interface at their corresponding transaction authoriser, a payment instrument associated with both the user and the transaction authoriser is whitelisted 410. A unique-user-reference associated with the whitelisted payment instrument is then transmitted to the user-proxy of the invention to register a user 412. Upon a purchase made using the user-proxy registered payment instrument, an authorisation message associated with the user reference is transmitted to the user-proxy 414 where it is enhanced with user data. The user-proxy then identifies and sends the unique-user-referenceto the transaction initiator where it is extracted and saved to the transaction data 416. At the transaction initiator, user's data is processed according to user processing instructions transmitted by the user-proxy 418.

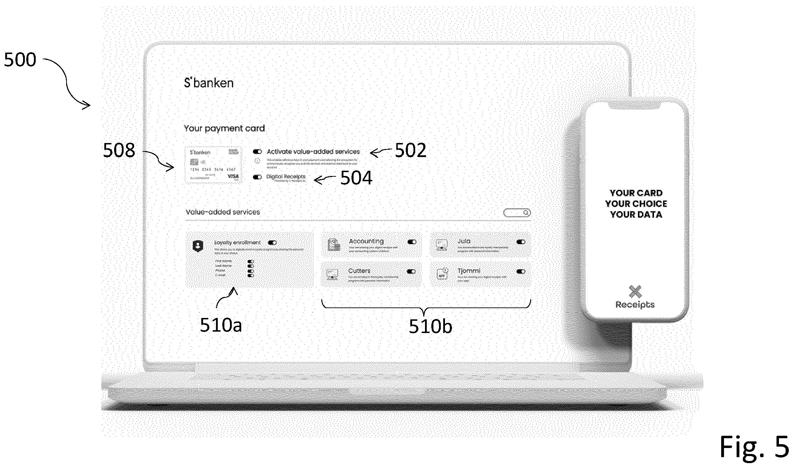

Figure 5 shows an example user interface 500 of a transaction authoriser with user-proxy capabilities. In the example of figure 5, the transaction authoriser is a bank, and the user interface is a member area of a bank application (App) or website. From the user's member area of the App or website, the user can control various capabilities enabled by the user-proxy. In the particular example of figure 5, the user can activate value added services 502 and digital receipts 504 for an associated payment instrument (payment card 506). As well as simply activating value added services, the user can make specific choices within the value-added services capability. For example, the user can turn on and off the capability of semi-automatically joining loyalty programs associated with transaction initiators 510a. Yet further, the user can select particular information to be transmitted to the transaction initiators when joining said loyalty programs. The information may include a first name, a surname, a phone number and an email each which may be individually selected to be included in user data to be transferred to the transaction initiator in accordance with step 70 of method 200. Further examples of value-added service capabilities comprise enabling digital receipts to be automatically transmitted to further data processing entities 510b. These further data processing entities may include personal accounting platforms, insurances companies, expenses systems to name a few non-limiting examples. The inclusion of each of the further data processing entities in the automatic digital receipts capability may be turned off and on independently. Thus, the user-proxy acts as a digital consent portal which is fully integratable with an online banking provider associated with a chosen payment instrument. In this way, all user consent preferences are connected to a unique payment instrument (i.e., payment card) and the user-proxy personal key (unique-user-reference) associated with the chosen payment instrument. In the example of figure 5, the online banking provider act as a service platform for access to the CMH. However, any service provider integrated with the CMH can serve as the service platform. Therein a user can log into the service platform and provide consent preferences through said service platform.

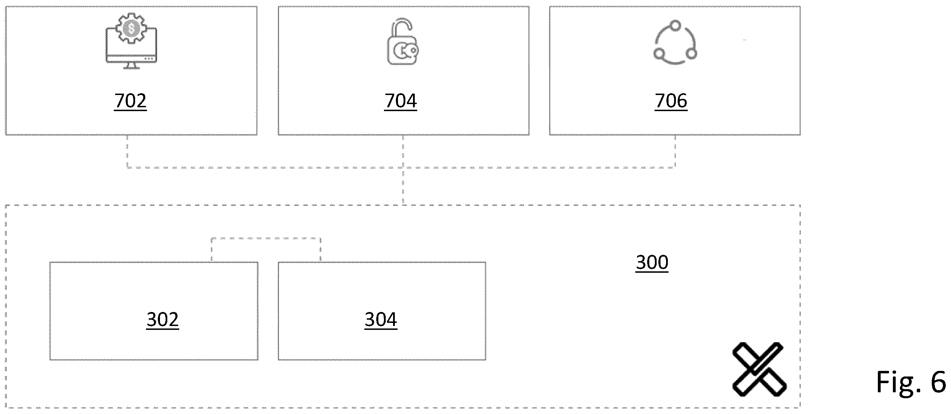

Figure 6 is a visual representation of a number of functionalities enabled by the user-proxy system 300 having the first storage module 302 containing payment instrument identification and second storage module 304 comprises computer readable media (CRM) and database, and method of the invention. For example, the system and method of invention enable a single payment card to be identified using a single unique key, which enables access to many services and full portability through user consent preferences. In a first functionality 702, digital receipts are linkable to their corresponding transactions and can be relayed to several third-party financial services such as: an online bank, personal accounting system, other Fintech applications, and insurance services. In a second functionality 704, the user's payment instrument can be used as a key card to unlock and/or open bought services such as: hotel rooms, public transport, events and bookings, self-service checkout. In a third functionality 706, data portability between channels is enabled though key verification to enable: joining of loyalty schemes, and authorisation and verification of various data processing usages.

The user-proxy system and method of the invention adds a digital consent portal on top of the existing infrastructure issuing personal keys, allowing a single personal key to be linked with multiple services and systems.

By utilizing the power of GDPR (license to operate) effectively a universal key management system where one payment card has one unique key (unique-user-reference) that can be requested by all systems universally.

The utilization of the personal key (unique-user-reference) is limited to the user's explicit consent on a plurality of data processing instructions. This enables a single key (unique-user-reference) to be connected to multiple services within the financial ecosystem. This is in contrast to traditional methods of identifying payment cards which rely on payment tokens that depends on the individual merchant or payment system providers direct involvement. Thus, the present invention ensures a more streamlined and efficient process for both users and merchants.

Certain regulations and standards apply to system providers who are involved in processing payment information. For example, the European Banking Authority is a regulatory body in the European Union responsible for supervising and regulating the financial industry. In the context of payment processing, the EBA sets rules and guidelines to ensure the security and integrity of financial transactions. In another example, the Payment Card Industry Data Security Standard (PCI-DSS) is a set of security standards established by the Payment Card Industry Security Standards Council (PCI SSC). These standards are designed to protect sensitive payment card data, such as credit card numbers and cardholder information, from data breaches and fraud. Any organization that handles payment card data is required to comply with PCI-DSS. Thus, system providers involved in processing payment information in the financial sector are subject to strict regulations and standards. These regulations are in place to ensure the security and confidentiality of personal information, especially sensitive financial data. System providers must comply with these regulations to protect against data breaches, fraud, and other security risks. Because of the architecture of the user-proxy system and method of the invention, financial regulations such as those described above are necessarily and automatically fulfilled, providing a simplified and legally compliant infrastructure.

The user-proxy system and method described herein enables handling of personal data in relation to information in parallel in the pay proxy that is compliant with in its use of payment user data, purchase user data and customer data.

As a comparison, the below table shows a plurality of data processors in the financial ecosystem against their compliance with various types of data handling compliance.

**Table 8**

| Processor | Data type | | | In partnership with receipts | Examples |
|---|---|---|---|---|---|
| | Payment | Line item | Customer | | |
| User-proxy according to the invention | Not compliant | Compliant | Compliant | Compliant | User-proxy according to the invention |
| Bank | Compliant | Not compliant | Not compliant | Compliant | DNB^{®} |
| Scheme | Compliant | Not compliant | Not compliant | Compliant | VISA^{®} |
| Payment service provider | Compliant | Not compliant | Not compliant | Compliant | VERIFONE^{®} |
| Electronic Cash Register | Compliant | Not compliant | Not compliant | Compliant | SUSOFT^{®} |
| Merchant | Not compliant | Compliant | Compliant | Compliant | BILTEMA^{®} |

Table 8 demonstrates that the user-proxy system and associated method of the invention enables automatic compliance of user data handling across the spectrum of user data that occurs in the financial ecosystem since customer consent is pre-obtained. In contrast, banks and other parties in the financial ecosystem are not automatically compliant but must request user consent directly, and are further restricted by the current legislation in offering a such service without a third party.

### Example

The following is an illustrative example of a particular use of the invention.

A particular user frequently shops at various merchants each having their own loyalty program. The user uses their payment card for all their transactions. The user has enrolled their payment card with the user-proxy of the invention, which has generated a unique-user-reference for said payment card.

The user visits a first merchant Merchant A and makes a purchase using their enrolled payment card. The cashier system at Merchant A receives the payment card's unique-user-reference to authenticate the user's data-ownership rights. The cashier system then identifies that the user's user-reference is not yet enrolled in their loyalty program. The cashier/clerk asks the user if they would like to become a member. The user agrees to enroll. The cashier initiates the enrollment process by sending a request through the user-proxy of the invention's infrastructure to the user's chosen E-ID provider. The user digitally consents to the enrollment on-site. The user-proxy of the invention then sends the user's predefined credentials, contact information, and marketing consents to the cashier system. This information is linked with the user's unique-user-reference.

The user is now enrolled in Merchant A's loyalty program. Their payment card and user-reference are now recognized and identified at Merchant A, and they have a registered loyalty profile. The user repeats the same process at Merchant B, Merchant C, and so forth. Each time, the user's unique-user-reference allows them to easily and quickly enroll in each merchant's loyalty programs.

The user now has a single user-reference for their payment card associated with their account number that connects them to multiple loyalty programs. This simplifies their shopping experience wherein the need to remember multiple loyalty numbers or carry multiple loyalty cards is abolished. It also allows them to potentially manage their loyalty memberships and view their purchase history across various merchants from a single platform.

This use case demonstrates how the technology enables a user to use a single user-reference (their payment instrument) to enroll in and connect with multiple loyalty programs. This greatly simplifies the user's experience and makes managing loyalty memberships much more convenient.

The present invention provides the following technical benefits.

The invention is user-centric and system agnostic which may enable any system and/or merchant to connect without the need for PCI-DSS compliance or a specific payment system provider setup. The system-agnostic payment card recognition, whereby the invention works with any type of payment system provider eliminates the need for PAN encryption and provides a unique-user-reference for various integrations and data-processing purposes. The limitations of existing solutions that are platform-specific and require complex setup are overcome. This allows for a streamlined and efficient alternative to prior solutions in the field. Furthermore, users can connect with their purchase data across various payment acceptor systems by providing a real-time and payment card specific static user-reference embedded with the user's data-processing instructions. Data control is shifted to system users which enables compliance with data protection regulations such as GDPR, PCI-DSS, and EBA regulations. Furthermore, this enables the system to act as a controller on the user's behalf which can eliminate the complexity of gathering consent preferences from a plurality of individual merchants before starting a data-processing of a corresponding users' data.

Furthermore, additional effects resulting from the present invention are as follows. Frictionless loyalty experiences may be enabled for both the user and the merchant. Users can stay connected with their purchase data while preserving their privacy rights and enabling them to instruct on data-processing activities. People can be connected with their purchase data agnostically through payment card recognition, regardless of the users' membership status at the merchant's. The process of becoming a loyalty customer may be simplified and the need for users to manage multiple merchant-specific user profiles may be eliminated.

Users can opt-in to loyalty programs agnostically through server-to-server enrollment of personal information, all through a real-time on-demand digital consent request.

A yet further advantage of the present invention is that it may create an environment that allows cashier systems to function as data-controllers on behalf of users. This is enabled since the invention can ensure that user consent is verifiable, and that data processing does not result in any additional charges for merchants. According to legal regulations such as GDPR and VAT, the customer (payment card user) has the right to possess the original proof of purchase. Further, users have the right to instruct the merchant on their preferred channel or medium to receive the proof of purchase.

The user-proxy of the present invention enables a combination of the payment instrument, the user reference and the user consent preferences to act as a digital twin which is a virtual representation of an individual's data-processing preferences, ensuring user ownership and privacy rights during electronic payment transactions. The benefits of having a digital twin within the payment card system include a more personalized and tailored shopping experience, enhanced security and broader data connectivity for the user. When a user updates their settings in the CMH, the CMH may instantaneously update a profile card of the corresponding payment instrument in the form of a digital twin. This ensures that the user's preferences are accurately reflected in their digital twin, enabling personalized and consent-based service delivery. Thus, in the context of transactions, the digital twin capability of the present invention bridges the gap between the user and the financial ecosystem.

Having described preferred examples of the invention it will be apparent to those skilled in the art that other embodiments incorporating the invention may be used. These and other examples of the invention illustrated above are intended by way of example only and the actual scope of the invention is to be determined from the appended claims.

## Claims

1. A user-proxy system in data communication with at least one transaction initiator and at least one payment system provider, wherein a payment instrument of the user is associated with the at least one payment system provider and is registered to the user-proxy system, the user-proxy system comprising:
a first storage module configured to store user data; and
a second storage module comprising computer readable media having instructions that, when executed on a processor, perform the tasks of:
identifying that a transaction has occurred with the payment instrument registered by the user-proxy system at the at least one transaction initiator registered by the user-proxy system;
acquiring, by the user-proxy system, a replica of an authorisation message associated with the payment instrument, wherein the payment instrument is enrolled;
enhancing, by the user-proxy system, the authorisation message by incorporating a unique-user-reference, along with a user's pre-established directives for data-processing obtained or generated during the payment instrument's enrollment process, thereby providing a user-data enriched authorisation message;
priming the user-data enriched authorisation message for onward transmission to a verified transaction initiator for further data-processing;
based on comparing information in the authorisation message with pre-registered system identifications present in the authorisation message by the transaction initiator, identifying a correct transaction initiator of at least one transaction initiators, wherein the correct transaction initiator is associated with a corresponding electronic transaction and thereby a correct recipient of user data; and transmitting, by the user-proxy system, the user data to said correct transaction initiator.

2. The system of claim 1, wherein the unique-user-reference associated with the payment instrument provide an authentication key for data ownership belonging to the user associated with the payment instrument.

3. The system of claim 2, wherein the system is configured to perform real-time exchange of user and/or purchase related data between the transaction initiator and a transaction authoriser associated with the least one payment system provider via the user-proxy.

4. The system of claim 2, wherein the system is configured, if a transaction is initiated when the user-proxy is in an offline state, to perform exchange of user and/or purchase related data between the transaction initiator and a transaction authoriser associated with the least one payment system provider via the user-proxy for a batch of a plurality of transactions once the user-proxy enters an online state.

5. The system of any preceding claim, wherein the transaction initiator forms part of the system and is configured to store the unique-user-reference with the transaction data to provide to the transaction initiator a proof of data ownership belonging to the user.

6. The system of claim 5, wherein:
the transaction initiator is connected with a loyalty program;
the transaction initiator is further configured to identify whether or not the payment instrument is enrolled in the loyalty program;
wherein, if it is identified that the payment instrument is not enrolled, the computer readable media of the second storage module comprises further instructions that, when executed on a processor, perform the tasks of:
generating an enrollment message for the user;
if the system receives a user consent message in response to the enrollment message, transmitting an enrollment request through the user-proxy to a predetermined electronic ID provider; and
digitally sending one or more of a user's predefined credentials, contact information, and marketing consents to the transaction initiator.

7. The system of claim 6, wherein transaction initiator is further configured to: connect the one or more of the user's predetermined credentials, contact information, and marketing consents with the unique-user-reference; and establish a loyalty program profile for the user.

8. The system of any of claims 5 to 7, wherein the transaction initiator is further configured to use the unique-user-reference associated with the payment instrument as a unique identifier for authorising access to purchased services or products.

9. The system of claim 8, wherein the transaction initiator is digitally connected to an online instrument and the payment instrument as the unique identifier is used as a key card to access said online instruments.

10. The system of claim 9, wherein the online instrument comprises a digital content distribution platform.

11. The system of claim 10, wherein the online instrument comprises a physical access control system.

12. The system of any preceding claim, further comprising:
a platform selected by the user;
wherein the first storage module comprises one or more predetermined user data processing instructions comprising a digital receipts service instructions; and
wherein the second storage module comprises instructions for a digital receipt service that, when executed on a processor, perform the task of:
generating a digital receipt;
delivering the digital receipt to the selected platform.

13. A method for secure user data processing using a user-proxy comprising:
a) enrolling at least one payment instrument in a user-proxy system;
b) initiating an electronic transaction at a transaction initiator by the enrolled payment instrument;
c) sending an authorisation request to a transaction authoriser by the transaction initiator through a payment system provider;
d) generating and retaining an authorisation message by at least the transaction initiator and the transaction authoriser, wherein the authorisation message comprises distinctive system and transaction tracing identifications;
e) approving by the transaction authorizer the requested transaction and issuing an approval code;
f) receiving by the transaction initiator an approved authorisation message response, wherein the approved authorisation message response comprises the unique approval code;
g) gathering and archiving, by the transaction initiator, transaction data from a corresponding payment log, via a payment system provider, wherein the payment system provider may be a payment terminal, gateway and/or wallet;
h) after obtaining the user's consent, issuing a unique-user-reference and linking said unique-user-reference to the enrolled payment instrument;
i) acquiring, by the user-proxy, a replica of the authorisation message associated with the enrolled payment instrument;
j) enhancing, by the user-proxy, the authorisation message by incorporating the unique-user-reference, along with a user's pre-established directives for data-processing, obtained or generated during the payment instrument's enrollment process to provide a user-data enriched authorisation message;
k) priming the user-data enriched authorisation message for onward transmission to a verified transaction initiator, for further data-processing;
l) comparing information in the authorisation message response to identify the correct transaction initiator of the corresponding electronic transaction and thereby a correct recipient of user data; and
m) transmitting, by the user-proxy, the user data to said correct transaction initiator.

14. The method of claim 13, wherein the unique-user-reference associated with the payment instrument provides authentication of a data ownership belonging to the user associated with the payment instrument.

15. Computer readable media having instructions that, when executed on a processor, perform the tasks of claim 13 or claim 14.
